# EUROPÄISCHE PATENTSCHRIFT

(11) **EP 2 361 874 B1**
(45) Veröffentlichungstag und Bekanntmachung des Hinweises auf die Patenterteilung: **17.12.2014**
(21) Anmeldenummer: 10196156.3
(22) Anmeldetag: 21.12.2010
(51) Int. Cl.: B67C 7/00

(54) **Behälterformungs- und Behälterbehandlungsanlage**
Container forming and treatment assembly
Installation de formation et de traitement de récipient

(30) Priorität: 22.02.2010 DE 102010000501
(43) Veröffentlichungstag der Anmeldung: 31.08.2011
(73) Patentinhaber: Krones AG, 93073 Neutraubling (DE)
(72) Erfinder: Höllriegl, Thomas, 93073 Neutraubling (DE); Sternkopf, Bernhard, 93073 Neutraubling (DE)
(74) Vertreter: Benninger, Johannes

(56) Entgegenhaltungen:
- EP-A1- 0 758 624
- EP-A1- 1 553 045
- WO-A1-2010/081759
- DE-C- 823 266

## Beschreibung

Die vorliegende Erfindung betrifft eine Anlage zur Behälterformung und Behälterbehandlung gemäß dem Oberbegriff des unabhängigen Anspruchs 1. Die Erfindung betrifft weiterhin ein Verfahren zur Steuerung einer solchen Behälterformungs- und Behälterbehandlungsanlage mit den Merkmalen des unabhängigen Verfahrensanspruchs.

Bekannte Behälterformungs- und Behälterbehandlungsanlagen umfassen in der Regel mehrere miteinander gekoppelte Stationen, die mittels geeigneter Transportsysteme miteinander gekoppelt sind. Als platzsparende und mit sehr hoher Verarbeitungsgeschwindigkeit zuverlässig betreibbare Transportsysteme haben sich in vielen Fällen sog. Übergabesterne durchgesetzt, die mit hoher Geschwindigkeit rotieren und die wechselweise ineinander greifen, um die Behälter von einem Übergabestern zum nächsten zu übergeben. Einem Zuführbereich für sog. Vorformlinge aus thermoplastischem Kunststoff folgt meist ein sog. Heizmodul, mit dessen Hilfe die Vorformlinge auf eine Umformtemperatur gebracht werden, um sie in einer nachfolgenden Station einem Blasform- oder Streckblasformprozess unterziehen zu können. Hierbei werden die Vorformlinge zu Kunststoffbehältern gewünschter Größe und Kontur umgeformt, um sie in einem nachfolgenden Prozess mit einer gewünschten Flüssigkeit befüllen zu können, bspw. mit einem Kaltgetränk. An ein solches Füllmodul können sich eine Station zum Verschließen der Behälter sowie eine Etikettierstation, eine Druckstation o. dgl. anschließen.

Der Fülltransferbereich muss regelmäßig gereinigt werden, zumindest jedoch nach einem Produktwechsel. Da es bei diesen Reinigungsprozessen des Fülltransferbereichs immer wieder zu Verschleppungen von Reinigungsmittel zur Blasmaschine kommt, können dort Probleme entstehen. Da die Aggregate sowie Einzelteile der Blasmaschine nicht dafür ausgelegt sind, mit teilweise aggressiven Reinigungsmitteln beaufschlagt zu werden, können an diesen Bauteilen Korrosionsschäden auftreten. Soll dies vermieden werden, müssen Vorkehrungen getroffen werden, bspw. durch Einbau relativ aufwändiger Absaugeinrichtungen.

Eine Vorrichtung und ein Verfahren zur Herstellung unterschiedlicher Kunststoffbehälter ist aus der DE 10 2006 053 193 A1 bekannt. Verschiedene Behälterbehandlungsstationen können hierbei in gegenüber der Umgebung abgeschlossenen Räumen angeordnet sein; auch kann die gesamte Behälterbehandlungsstation als Reinraum ausgebildet sein.

Eine Flaschenbehandlungsanlage mit mehreren Behandlungseinheiten, die kinematisch starr miteinander gekoppelt sind, ist weiterhin aus der DE 10 2006 059 001 A1 bekannt. Einzelne Behandlungseinheiten sollen mit unterschiedlichen Verarbeitungsgeschwindigkeiten betrieben werden können, ohne dass dies zwingend die Verarbeitungsgeschwindigkeiten der übrigen Stationen beeinflusst.

Eine Behälterbehandlungsanlage gemäß dem Oberbegriff des Anspruchs 1 ist in DE823266 offenbart.

WO2010/081759, veröffentlicht am 22.07.2010, offenbart eine weitere Behälterbehandlungsanlage mit mehreren Behandlungseinheiten.

Ein Ziel der vorliegenden Erfindung besteht darin, eine Behälterbehandlungsanlage mit mehreren miteinander gekoppelten Stationen zur Verfügung zu stellen, bei der einzelne Stationen voneinander abschirmbar ausgebildet sind. Insbesondere bei Reinigungsarbeiten einzelner Stationen sollen Verschleppungen von Reinigungsmitteln und/oder Verunreinigungen benachbarter Stationen verhindert werden können.

Zur Erreichung dieser Ziele schlägt die vorliegende Erfindung eine Behälterbehandlungsanlage mit Abschirmungsmöglichkeiten oder Möglichkeiten der Entkoppelung zwischen einzelnen Stationen und/oder ihren Transportsystemen vor. So umfasst die Erfindung eine Anlage mit mehreren miteinander gekoppelten Stationen zur Behälterformung, Behälterbehandlung und/oder zur Behälterbefüllung, die mehrere rotierende, jeweils ineinander greifende und die Behälter transportierende und befördernde Halte- und Übergabeeinrichtungen in und zwischen ihren einzelnen Stationen aufweist. Zumindest eine Transport- und Übergabeverbindung zwischen wenigstens zwei benachbarten Stationen ist durch Entkoppelung mindestens einer von mehreren rotierenden Halte- bzw. Übergabeeinrichtungen aus einem Eingriffsbereich mit wenigstens einem der benachbarten rotierenden Halte- bzw. Übergabeeinrichtung auftrennbar ausgebildet. Wenn im vorliegenden Zusammenhang von Halte- oder Übergabeeinrichtungen die Rede ist, so sind damit bspw. an sich bekannte Transportsterne gemeint, die als sog. Behandlungssterne als auch als sog. Transfersterne ausgebildet sein können. An diesen Transportsternen werden die zu behandelnden und/oder zu transportierenden Behälter in aller Regel im Mündungsbereich haltend transportiert, ggf. unterstützt durch einen sog. Halsring am Behälter, der ein Abrutschen verhindert. Diese Transportsterne, die in der Regel um vertikale Achsen rotieren, können unterschiedliche Durchmesser aufweisen. Normalerweise sind die Behandlungssterne in ihrem Durchmesser größer als die Transfersterne und es finden dort die hauptsächlichen Behandlungsschritte statt. Durch die erfindungsgemäße Möglichkeit der Entkoppelung einzelner Stationen bzw. deren Verbindungs- oder Transporteinrichtung wird die Reinigung einzelner Stationen erleichtert, bspw. der Füllstation, ohne dass es hierbei zu Verunreinigungen und Verschleppungen von Reinigungsmitteln in die benachbarten bzw. temporär entkoppelten Nachbarstationen kommen muss.

Erfindungsgemäß weist die Anlage wenigstens eine verstellbare Abschotteinrichtung innerhalb einer der Stationen oder zwischen wenigstens zwei benachbarten Stationen auf. Zudem weist die Anlage wenigstens eine in horizontaler und/oder vertikaler Richtung beweglich angeordnete Halte- bzw. Ubergabeeinrichtung auf Dabei ist die wenigstens eine in horizontaler Richtung verschiebbare Halte- bzw. Übergabeeinrichtung mit der verstellbaren Abschotteinrichtung gekoppelt wodurch ein Reinigungs- oder Wartungsmodus durch Aktivierung der Abschotteinrichtung und gleichzeitige Bewegung bzw. Entkopplung des verschiebbaren Transfersterns bzw. eines anderen entsprechenden Übergabemechanismus eingestellt werden kann.

In zweckmäßiger Weiterbildung der erfindungsgemäßen Behälterbehandlungsanlage kann die wenigstens eine in horizontaler und/oder vertikaler Richtung beweglich angeordnete Halte- bzw. Übergabeeinrichtung einen elektrisch, pneumatisch oder mechanisch antreibbaren Schiebemechanismus aufweisen Hierfür kann sich bspw. eine Servospindel, ein Verstellzylinder, ein Verstellrad oder eine andere geeignete Verstellmechanik eignen. Die wenigstens eine Abschotteinrichtung kann als verschiebbare Schottwand ausgebildet sein, die ebenfalls elektromotorisch, pneumatisch oder auf andere Weise bewegt werden kann. Die vorliegende Erfindung stellt damit eine Behälterbehandlungsanlage zur Verfügung, bei der mindestens ein Transfer- oder Transportstern beweglich gelagert ist, so dass er bspw. unter oder neben einen Ausgabestern einer Blasstation verschoben werden kann, um den Transferbereich zu einer benachbarten Füllstation frei zu machen. In diesen Freiraum kann dann eine geeignet angeordnete Schottwand o. dgl. geschoben werden, wodurch der Reinigungsbereich des Füllers von dem Bereich der Blasstation getrennt und abgeschottet werden kann, bevor ein Reinigungszyklus gestartet wird. Der gesamte Bereich der Blasstation sowie alle in Transportrichtung vor der Blasstation befindlichen Behälterbehandlungsstationen können auf diese Weise zuverlässig vor Verunreinigungen und Beaufschlagungen mit Reinigungsmittel geschützt werden.

Eine mögliche und für die Praxis besonders sinnvoll konfigurierte Anlage umfasst wenigstens ein Heizmodul für Vorformlinge aus thermoplastischem Kunststoff, wenigstens ein Blasform-Modul zur Blas- oder Streckblasumformung der Vorformlinge in Flüssigkeitsbehälter sowie wenigstens eine Füllstation zur Befüllung der Flüssigkeitsbehälter mit Flüssigkeit. Die deaktivierbare und/oder entkoppelbare Halte- bzw. Übergabeeinrichtung und/oder die verstellbare Abschotteinrichtung ist hierbei vorzugsweise zumindest zwischen dem Blasform-Modul und der sich daran anschließenden Füllstation angeordnet, so dass die Blasformstation bei Reinigungsarbeiten der Füllstation zuverlässig abgeschirmt werden kann. Die Blasstation kann dadurch effektiv geschützt werden, insbesondere vor Verunreinigungen und vor Korrosion. Zudem ermöglicht es die Erfindung, die Füllbereiche intensiver zu reinigen, da keine Rücksicht auf benachbarte Stationen genommen werden muss.

Die vorliegende Erfindung umfasst weiterhin ein Verfahren zum Betrieb und/oder zur Reinigung einer erfindungsgemäßen Anlage mit mehreren miteinander gekoppelten Stationen zur Behälterformung, Behälterbehandlung und/oder zur Behälterbefüllung, die mehrere rotierende, jeweils ineinander greifende und die Behälter transportierende und befördernde Halte- und Übergabeeinrichtungen in und zwischen ihren einzelnen Stationen aufweist. Zumindest bei Reinigungsarbeiten kann eine Transport- und Übergabeverbindung zwischen wenigstens zwei benachbarten Stationen durch Entkoppelung mindestens einer von mehreren rotierenden Halte- bzw. Übergabeeinrichtungen aus einem Eingriffsbereich mit wenigstens einem der benachbarten rotierenden Halte- bzw. Übergabeeinrichtung gebracht werden. Wahlweise oder zusätzlich kann zudem wenigstens eine verstellbare Abschotteinrichtung innerhalb einer der Stationen oder zwischen wenigstens zwei benachbarten Stationen aktiviert werden.

Die Erfindung wird nachfolgend anhand eines bevorzugten Ausführungsbeispiels unter Bezugnahme auf die beiliegenden Zeichnungen näher erläutert. Es sei jedoch betont, dass die Ausführungsbeispiele zur Veranschaulichung der Erfindung dienen, jedoch keinesfalls einschränkend zu verstehen sind.
Fig. 1 zeigt ein schematisches Übersichtsbild einer erfindungsgemäßen Anlage mit aktiviertem Transferstern zwischen einer Blasstation und einer Füllstation.
Fig. 2 zeigt in einer weiteren schematischen Darstellung der Anlage einen deaktivierten, in horizontaler Richtung verschobenen Transferstern und eine zwischen die Blasstation und die Füllstation geschobene Schottwand.

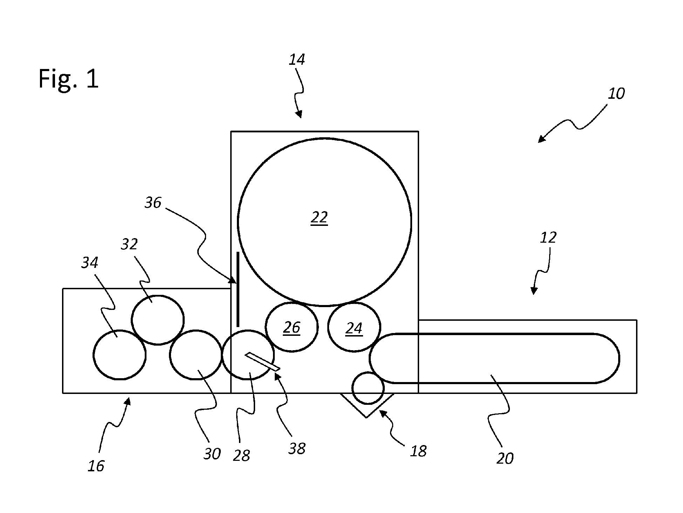

Das schematische Übersichtsbild der Fig. 1 zeigt eine erfindungsgemäße Behälterbehandlungsanlage 10, die im Wesentlichen aus einem Heizmodul 12, einem Blasformmodul 14 sowie einer Füllstation 16 gebildet ist. Das Heizmodul 12 weist eine Zuführung 18 für Vorformlinge aus thermoplastischem Kunststoff auf, die innerhalb einer Heizstrecke 20 im Heizmodul 12 auf eine gewünschte Umformtemperatur gebracht werden, um sie in der nachfolgenden Blasstation 14 mittels eines Blasvorgangs oder eines Streckblasvorgangs in eine gewünschte Behälterform bringen zu können. Zwischen der Heizstrecke 20 und einem Behandlungsstern 22 des Blasmoduls 14, in dem während seiner Rotation die Behälter geblasen werden, befindet sich ein erster rotierender Transferstern 24, der zur definierten Übergabe der erwärmten Vorformlinge in den Behandlungsstern 22 des Blasmoduls 14 dient. Am Ausgang des Behandlungssterns 22 des Blasmoduls 14 befindet sich ein zweiter Transferstern 26 bzw. ein sog. Ausgabestern der Blasstation 14, der die fertig geformten Behälter an einen nachfolgenden dritten Transferstern 28 übergibt, der sich noch weitgehend im Bereich der Blasstation 14 befindet, jedoch gemäß der schematisch gezeichneten Darstellung der Fig. 1 auch geringfügig in den Bereich der Füllstation 16 - auch als Fülltransfer bezeichnet - ragt. Im Bereich der Füllstation sind drei weitere rotierende Transfer- und/oder Behandlungssterne 30, 32 und 34 erkennbar, die zur Handhabung der Behälter und deren Befüllung mit einer Flüssigkeit, bspw. mit einem Getränk, dienen bzw. beitragen. Im Bereich der Blasstation 14 ist eine verschiebbare Schottwand 36 erkennbar, die zur Abschottung der Blasstation 14 gegen die Füllstation 16 dienen kann.

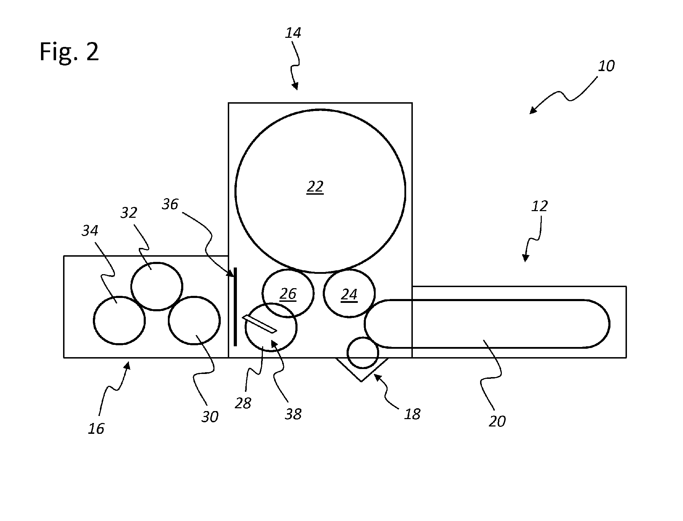

So zeigt die Darstellung der Fig. 2 einen deaktivierten, in horizontaler Richtung verschobenen dritten Transferstern 28 und die zwischen die Blasstation 14 und die Füllstation 16 geschobene Schottwand 36. Der im gezeigten Ausführungsbeispiel in horizontaler Richtung beweglich angeordnete dritte Transferstern kann bspw. einen elektrisch, pneumatisch oder mechanisch antreibbaren Schiebemechanismus 38 aufweisen. Hierfür kann sich bspw. eine Servospindel, ein Verstellzylinder, ein Verstellrad oder eine andere geeignete Verstellmechanik eignen. Die verschiebbare Schottwand 36 kann wahlweise elektromotorisch, pneumatisch oder auf andere Weise bewegt werden. Die erfindungsgemäße Behälterbehandlungsanlage 10 liefert somit eine Möglichkeit eines beweglich gelagerten Transfersterns 28, so dass er bspw. unter oder neben einen Ausgabestern 26 der Blasstation 14 verschoben werden kann, um den Transferbereich zur benachbarten Füllstation 16 frei zu machen. In diesen Freiraum kann dann die geeignet angeordnete Schottwand 36 geschoben werden, wodurch der Reinigungsbereich des Füllers 16 von dem Bereich der Blasstation 14 getrennt und abgeschottet werden kann, bevor ein Reinigungszyklus gestartet wird. Der gesamte Bereich der Blasstation 14 sowie alle in Transportrichtung vor der Blasstation 14 befindlichen Behälterbehandlungsstationen können auf diese Weise zuverlässig vor Verunreinigungen und Beaufschlagungen mit Reinigungsmittel geschützt werden.

### Bezugszeichenliste:

- 10: Behälterbehandlungsanlage
- 12: Heizmodul
- 14: Blasmodul, Blasstation
- 16: Füllstation, Fülltransfer
- 18: Zuführung
- 20: Heizstrecke
- 22: Behandlungsstern
- 24: erster Transferstern
- 26: zweiter Transferstern, Ausgabestern
- 28: dritter Transferstern
- 30: vierter Transferstern
- 32: fünfter Transferstern
- 34: sechster Transferstern
- 36: Schottwand
- 38: Schiebemechanismus

## Patentansprüche

1. Behälterbehandlungsanlage (10) mit mehreren miteinander gekoppelten Stationen (12, 14, 16) zur Behälterformung, Behälterbehandlung und/oder zur Behälterbefüllung, die mehrere rotierende, jeweils ineinander greifende und die Behälter transportierende und befördernde Halte- und Übergabeeinrichtungen in und zwischen ihren einzelnen Stationen (12, 14, 16) aufweist, wobei eine Transport- und Übergabeverbindung zwischen wenigstens zwei benachbarten Stationen (14, 16) durch Entkoppelung mindestens einer von mehreren rotierenden Halte- bzw. Übergabeeinrichtungen aus einem Eingriffsbereich mit wenigstens einem der benachbarten rotierenden Halte- bzw. Übergabeeinrichtung auftrennbar ist, **dadurch gekennzeichnet, dass** die Behälterbehandlungsanlage (10) wenigstens eine verstellbare Abschotteinrichtung (36) innerhalb einer der Stationen (14) oder zwischen wenigstens zwei benachbarten Stationen (14, 16) aufweist, sowie wenigstens eine in horizontaler und/oder vertikaler Richtung verschiebbare Halte- bzw. Ubergabeeinrichtung aufweist, wobei letztere mit der verstellbaren Abschotteinrichtung (36) gekoppelt ist.

2. Behälterbehandlungsanlage nach Anspruch 1 bei der die wenigstens eine in horizontaler und/oder vertikaler Richtung verschiebbare Halte- bzw. Übergabeeinrichtung einen elektrisch, pneumatisch oder mechanisch antreibbaren Schiebemechanismus (38) aufweist.

3. Behälterbehandlungsanlage nach einem der Ansprüche 1 bis 2 bei der die wenigstens eine Abschotteinrichtung als verschiebbare Schottwand (36) ausgebildet ist.

4. Behälterbehandlungsanlage nach einem der Ansprüche 1 bis 3 die wenigstens ein Heizmodul (12) für Vorformlinge aus thermoplastischem Kunststoff, wenigstens ein Blasform-Modul (14) zur Blas- oder Streckblasumformung der Vorformlinge in Flüssigkeitsbehälter sowie wenigstens eine Füllstation (16) zur Befüllung der Flüssigkeitsbehälter mit Flüssigkeit umfasst, wobei die deaktivierbare und/oder entkoppelbare Halte- bzw. Übergabeeinrichtung und/oder die verstellbare Abschotteinrichtung (36) zumindest zwischen dem Blasform-Modul (14) und der sich daran anschließenden Füllstation (16) angeordnet ist.

5. Verfahren zum Betrieb und/oder zur Reinigung einer Behälterbehandlungsanlage (10) gemäß einem der Ansprüche 1 bis 4 mit mehreren miteinander gekoppelten Stationen (12, 14, 16) zur Behälterformung, Behälterbehandlung und/oder zur Behälterbefüllung, die mehrere rotierende, jeweils ineinander greifende und die Behälter transportierende und befördernde Halte- und Übergabeeinrichtungen in und zwischen ihren einzelnen Stationen (12, 14, 16) aufweist, wobei zumindest bei Reinigungsarbeiten eine Transport- und Übergabeverbindung zwischen wenigstens zwei benachbarten Stationen (14, 16) durch Entkoppelung mindestens einer von mehreren rotierenden Halte- bzw. Übergabeeinrichtungen aus einem Eingriffsbereich mit wenigstens einem der benachbarten rotierenden Halte- bzw. Übergabeeinrichtung gebracht undwenigstens eine verstellbare Abschotteinrichtung innerhalb einer der Stationen (14) oder zwischen wenigstens zwei benachbarten Stationen (14, 16) aktiviert wird.

## Claims

1. A container treatment system (10) with multiple stations (12, 14, 16) that are coupled to each other for forming, treating, and/or filling containers, said container treatment system (10) having multiple rotating holding and transfer devices in and between the individual stations (12, 14, 16) of the container treatment system (10), said holding and transfer devices respectively engaging with each other and transporting and conveying the containers, wherein a transport and transfer connection between at least two adjacent stations (14, 16) can be disconnected from an engagement section with at least one engagement section of the adjacent rotating holding or transfer device by uncoupling at least one of multiple rotating holding or transfer devices, **characterised in that** the container treatment system (10) has at least one adjustable partitioning device (36) within one of the stations (14) or between at least two adjacent stations (14, 16) and at least one holding or transfer device that is shiftable in a horizontal and/or vertical direction wherein the latter holding or transfer device is coupled to the adjustable partitioning device (36).

2. The container treatment system as recited in claim 1 wherein the at least one holding or transfer device that is shiftable in a horizontal and/or vertical direction has an electrically, pneumatically, or mechanically drivable sliding mechanism (38).

3. The container treatment system as recited in one of the claims 1 to 2 wherein the at least one partitioning device takes the form of a shiftable partition wall (36).

4. The container treatment system as recited in one of the claims 1 to 3, which container treatment system comprises at least one heating module (12) for preforms made of a thermoplastic synthetic material, at least one blow moulding module (14) for blow moulding or stretch blow moulding the preforms to produce liquid containers, and at least one filling station (16) for filling liquid into the liquid containers, wherein the holding or transfer device that can be deactivated and/or uncoupled and/or the adjustable partitioning device (36) is arranged at least between the blow moulding module (14) and the thereto subsequent filling station (16).

5. A method for operating and/or cleaning a container treatment system (10) according to one of the claims 1 to 4 with multiple stations (12, 14, 16) that are coupled to each other for forming, treating, and/or filling containers, said container treatment system (10) having multiple rotating holding and transfer devices in and between the individual stations (12, 14, 16) of the container treatment system (10), said holding and transfer devices respectively engaging with each other and transporting and conveying the containers, wherein, at least during cleaning operations, a transport and transfer connection between at least two adjacent stations (14, 16) is removed from an engagement section with at least one engagement section of the adjacent rotating holding or transfer device by uncoupling at least one of multiple rotating holding or transfer devices and at least one adjustable partitioning device within one of the stations (14) or between at least two adjacent stations (14, 16) is activated.

## Revendications

1. Installation de traitement de récipients (10) comprenant plusieurs postes (12, 14, 16) couplés entre eux et destinés au formage de récipients, au traitement de récipients et/ou au remplissage de récipients, qui présente une pluralité de dispositifs de maintien et de transfert rotatifs à l'intérieur de et entre ses postes (12, 14, 16) individuels, qui sont chacun en prise entre eux et transportent et convoient les récipients, une liaison de transport et de transfert entre au moins deux postes (14, 16) voisins pouvant être séparée en découplant au moins un parmi plusieurs dispositifs rotatifs de maintien ou bien de transfert, d'une zone de prise avec au moins une du dispositif rotatif voisin de maintien ou bien de transfert, **caractérisée par le fait que** ladite installation de traitement de récipients (10) présente au moins un dispositif de cloisonnement réglable (36) à l'intérieur de l'un des postes (14) ou entre au moins deux postes (14, 16) voisins, ainsi qu'au moins un dispositif de maintien ou bien de transfert déplaçable dans la direction horizontale et/ou verticale, ce dernier étant couplé audit dispositif de cloisonnement (36) réglable.

2. Installation de traitement de récipients selon la revendication 1, dans laquelle ledit au moins un dispositif de maintien ou bien de transfert déplaçable dans la direction horizontale et/ou verticale présente un mécanisme de poussée (38) apte à être entraîné de manière électrique, pneumatique ou mécanique.

3. Installation de traitement de récipients selon l'une quelconque des revendications 1 à 2, dans laquelle ledit au moins un dispositif de cloisonnement est réalisé en tant que paroi de cloisonnement (36) déplaçable.

4. Installation de traitement de récipients selon l'une quelconque des revendications 1 à 3, qui comprend au moins un module de chauffage (12) pour des préformes en matière synthétique thermoplastique, au moins un module de moulage par soufflage (14) pour déformer par soufflage ou étirage-soufflage lesdites préformes en récipients de liquide ainsi qu'au moins un poste de remplissage (16) destiné à remplir de liquide lesdits récipients de liquide, le dispositif de maintien ou bien de transfert apte à être désactivé et/ou découplé et/ou ledit dispositif de cloisonnement (36) réglable étant disposé au moins entre ledit module de moulage par soufflage (14) et ledit poste de remplissage (16) qui suit celui-ci.

5. Procédé pour faire opérer et/ou nettoyer une installation de traitement de récipients (10) selon l'une quelconque des revendications 1 à 4, comprenant plusieurs postes (12, 14, 16) couplés entre eux et destinés au formage de récipients, au traitement de récipients et/ou au remplissage de récipients, qui présente une pluralité de dispositifs de maintien et de transfert rotatifs à l'intérieur de et entre ses postes (12, 14, 16) individuels, qui sont chacun en prise entre eux et transportent et convoient les récipients; au moins durant des travaux de nettoyage, une liaison de transport et de transfert entre au moins deux postes (14, 16) voisins étant séparée en découplant au moins un parmi plusieurs dispositifs rotatifs de maintien ou bien de transfert, d'une zone de prise avec au moins une du dispositif rotatif voisin de maintien ou bien de transfert, et au moins un dispositif de cloisonnement réglable étant activé à l'intérieur de l'un des postes (14) ou entre au moins deux postes (14, 16) voisins.
